# EUROPEAN PATENT APPLICATION

(11) **EP 4 656 480 A1**
(43) Date of publication of application: **03.12.2025**
(21) Application number: 23921949.6
(22) Date of filing: 17.02.2023
(51) Int. Cl.: B60W 30/06, B60W 30/09, B60W 40/02

(54) **INTELLIGENT PARKING METHOD AND DEVICE**

(71) Applicant: Shenzhen Yinwang Intelligent Technologies Co., Ltd., Shenzhen, Guangdong 518110 (CN)
(72) Inventor: XU, Lei, Shenzhen, Guangdong 518129 (CN); MA, Xiaokang, Shenzhen, Guangdong 518129 (CN); XIN, Fulong, Shenzhen, Guangdong 518129 (CN)
(74) Representative: Gill Jennings & Every LLP
(86) International application number: PCT/CN2023/076730
(87) International publication number: WO 2024/168799

(57) **Abstract**

An intelligent parking method and apparatus are provided. A planning module (120) determines a first parking path, and a control module (110) controls a vehicle (100) to park based on the first parking path; and if a first event occurs, the planning module (120) determines that the vehicle (100) is to complete parking, and the control module (110) controls the vehicle (100) to complete parking, or the planning module (120) determines a second parking path, and the control module (110) controls the vehicle (100) to park based on the second parking path. The second parking path is different from the first parking path. In an automatic parking process, when the first event occurs, the vehicle may switch a parking solution, to effectively avoid a safety risk or slow-start parking experience caused by continuing to park based on an original parking route. This improves user experience.

## Description

### TECHNICAL FIELD

This application relates to the field of intelligent driving, and in particular, to an intelligent parking method and apparatus.

### BACKGROUND

Automatic parking is a basic function of intelligent driving. In an actual parking scenario, the ground and surrounding environments are complex and changeable. During parking, there are often obstacles (such as wheel chocks, pavement bumps, speed bumps, road edges, shallow slopes, and pits). If a vehicle directly travels across the obstacle, the vehicle may fail to cross or may have a collision risk caused by overshooting after the crossing. If the vehicle does not travel across the obstacle, the vehicle may not be parked in place. In this case, manual takeover is required, affecting user experience.

How to improve safety of an automatic vehicle parking function and user experience is a technical problem that urgently needs to be resolved.

### SUMMARY

Embodiments of this application provide an intelligent parking method and apparatus, to improve safety of an automatic parking function of a vehicle and user experience.

According to a first aspect, an intelligent parking method is provided. The method includes: A vehicle parks based on a first parking path; and if a first event occurs, the vehicle completes parking or parks based on a second parking path. The second parking path is different from the first parking path.

In an automatic parking process of the vehicle, when the first event occurs, the vehicle may switch a parking solution, for example, directly complete parking or park based on a new parking route (namely, the second parking path). This can effectively avoid a safety risk or slow-start parking experience caused by continuing to park based on an original parking route (namely, the first parking path), and can improve user experience.

In this embodiment of this application, the first event includes but is not limited to the following types.

First type: The vehicle is stuck by an obstacle, and the vehicle still does not start after a drive torque of the vehicle increases to an upper torque limit.

The upper torque limit may be positively correlated with a length of a remaining path of the first parking path when the first event occurs.

When the vehicle is stuck by the obstacle and the vehicle still does not start after the drive torque of the vehicle increases to the upper torque limit, the vehicle switches a parking solution (for example, completing parking or switching to a new parking route), to avoid traveling across the obstacle. This improves a safety factor of automatic parking, reduces a takeover rate of a driver, and improves a parking success rate.

Second type: Speed reversal is caused by a collision of the vehicle with an obstacle.

When being collided and rebounded, the vehicle switches the parking solution (for example, completing parking or switching to a new parking route), to avoid traveling across the obstacle. This can increase a parking speed, and no manual takeover is required, to improve user experience of a parking function.

Third type: The vehicle stops in advance.

The stopping the vehicle in advance may be specifically stopping the vehicle in advance within a preset range from an end point.

When the vehicle stops before arriving at the parking end point, the vehicle switches the parking solution (for example, completing parking or switching to a new parking route), to avoid a risk of traveling across an obstacle like a wheel chock at the parking end point, and no manual takeover is required. This can enhance user experience of using the automatic parking function.

Currently, the foregoing several types are merely examples rather than limitations.

In a possible design, a start gear of the vehicle when the vehicle parks based on the second parking path is different from a gear of the vehicle before occurrence of the first event; and/or a start traveling direction of the vehicle when the vehicle parks based on the second parking path is different from a last traveling direction of the vehicle before occurrence of the first event.

In this way, it can be ensured that the second parking path is different from the first parking path, to avoid a safety risk caused by parking based on an original route.

In a possible design, the vehicle may further obtain chassis tracking information, and determine, based on the chassis tracking information, that the first event occurs.

In this way, the vehicle can accurately detect the first event, to help identify a risk in time and take a response measure (for example, switching a parking solution).

In a possible design, that the vehicle obtains chassis tracking information, and determines, based on the chassis tracking information, that the first event occurs includes: A control module of the vehicle obtains the chassis tracking information, and determines, based on the chassis tracking information, that the first event occurs. The method may further include: The control module of the vehicle reports a flag bit to a planning module of the vehicle, where the flag bit indicates that the first event occurs.

In this way, the control module monitors the first event and reports the flag bit to the planning module, so that the planning module can replan the parking solution in time after the first event occurs. This improves reliability of the solution.

In a possible design, that the vehicle completes parking or parks based on a second parking path includes: The planning module of the vehicle receives the flag bit from the control module, and determines, based on the flag bit, to complete parking or determines a second planned path; and the planning module sends a control instruction to the control module, and the control module receives the control instruction, and completes parking according to the control instruction or parks based on the second parking path.

In this way, the planning module replans the parking solution based on the flag bit, and delivers a new control instruction to the control module in time. This improves reliability of the solution.

In a possible design, different values of the flag bit may indicate different types of the first event.

This helps the planning module distinguish between different events, and replan the parking solution based on the different events.

In a possible design, that the vehicle completes parking or parks based on a second parking path includes: If the remaining path of the first parking path when the first event occurs does not exceed a preset distance, the vehicle completes parking, or if the remaining path of the first parking path when the first event occurs exceeds a preset distance, the vehicle parks based on the second parking path.

In this way, parking is directly completed when the vehicle approaches the end point, so that energy consumption of the vehicle can be reduced. When the vehicle is far away from the end point, parking is performed based on a new route, so that a risk can be avoided, parking in place can be ensured, and user experience can be improved.

In a possible design, the vehicle may further determine the second parking path based on a type of the first event.

In this way, it can be ensured that a newly planned route (namely, the second parking path) can better avoid a risk, and parking safety and efficiency can be improved.

According to a second aspect, an intelligent parking method is provided, and the method includes: A planning module determines a first parking path; a control module controls a vehicle to park based on the first parking path; and if a first event occurs, the planning module determines that the vehicle is to complete parking, and the control module controls the vehicle to complete parking; or the planning module determines a second parking path, and the control module controls the vehicle to park based on the second parking path. The second parking path is different from the first parking path.

In a possible design, the first event includes: The vehicle is stuck by an obstacle, and the vehicle still does not start after a drive torque of the vehicle increases to an upper torque limit; or speed reversal is caused by a collision of the vehicle with an obstacle; or the vehicle stops in advance.

In a possible design, the upper torque limit is positively correlated with a length of a remaining path of the first parking path when the first event occurs.

In a possible design, a start gear of the vehicle when the vehicle parks based on the second parking path is different from a gear of the vehicle before occurrence of the first event; and/or a start traveling direction of the vehicle when the vehicle parks based on the second parking path is different from a last traveling direction of the vehicle before occurrence of the first event.

In a possible design, the method further includes: The control module obtains chassis tracking information, and determines, based on the chassis tracking information, that the first event occurs.

In a possible design, the method further includes: The control module reports a flag bit to the planning module, where the flag bit indicates that the first event occurs.

In a possible design, that the planning module determines that the vehicle is to complete parking, and the control module controls the vehicle to complete parking includes: The planning module determines, based on the flag bit, that the vehicle is to complete parking, and sends a first control instruction to the control module; and the control module executes the first control instruction to control the vehicle to complete parking. Alternatively, that the planning module determines a second parking path, and the control module controls the vehicle to park based on the second parking path includes: The planning module determines the second parking path based on the flag bit, and sends a second control instruction to the control module; and the control module executes the second control instruction to control the vehicle to park based on the second parking path.

In a possible design, different values of the flag bit indicate different types of the first event.

In a possible design, that the planning module determines that the vehicle is to complete parking, and the control module controls the vehicle to complete parking; or the planning module determines a second parking path, and the control module controls the vehicle to park based on the second parking path includes: If the remaining path of the first parking path when the first event occurs does not exceed a preset distance, the planning module determines that the vehicle is to complete parking, and the control module controls the vehicle to complete parking, or if the remaining path of the first parking path when the first event occurs exceeds a preset distance, the planning module determines the second parking path, and the control module controls the vehicle to park based on the second parking path.

In a possible design, the method further includes: The planning module determines the second parking path based on a type of the first event.

According to a third aspect, an intelligent parking apparatus is provided, including a module configured to perform the method according to any one of the second aspect or the possible designs of the second aspect.

For example, the apparatus may include:
a planning module, configured to determine a first parking path; and
a control module, configured to control a vehicle to park based on the first parking path.

If a first event occurs, the planning module is further configured to determine that the vehicle is to complete parking, and the control module is further configured to control the vehicle to complete parking; or the planning module is further configured to determine a second parking path, and the control module is further configured to control the vehicle to park based on the second parking path. The second parking path is different from the first parking path.

In a possible design, the first event includes: The vehicle is stuck by an obstacle, and the vehicle still does not start after a drive torque of the vehicle increases to an upper torque limit; or speed reversal is caused by a collision of the vehicle with an obstacle; or the vehicle stops in advance.

In a possible design, the upper torque limit is positively correlated with a length of a remaining path of the first parking path when the first event occurs.

In a possible design, a start gear of the vehicle when the vehicle parks based on the second parking path is different from a gear of the vehicle before occurrence of the first event; and/or a start traveling direction of the vehicle when the vehicle parks based on the second parking path is different from a last traveling direction of the vehicle before occurrence of the first event.

In a possible design, the control module is further configured to: obtain chassis tracking information, and determine, based on the chassis tracking information, that the first event occurs.

In a possible design, the control module is further configured to report a flag bit to the planning module, where the flag bit indicates that the first event occurs.

In a possible design, the planning module is configured to: determine, based on the flag bit, that the vehicle is to complete parking, and send a first control instruction to the control module; and the control module is configured to execute the first control instruction to control the vehicle to complete parking. Alternatively, the planning module is configured to: determine the second parking path based on the flag bit, and send a second control instruction to the control module; and the control module is configured to execute the second control instruction to control the vehicle park based on the second parking path.

In a possible design, different values of the flag bit indicate different types of the first event.

In a possible design, if the remaining path of the first parking path when the first event occurs does not exceed a preset distance, the planning module is configured to determine that the vehicle is to complete parking, and the control module is configured to control the vehicle to complete parking. Alternatively, if the remaining path of the first parking path when the first event occurs exceeds a preset distance, the planning module is configured to determine the second parking path, and the control module is configured to control the vehicle to park based on the second parking path.

In a possible design, the planning module is further configured to determine the second parking path based on a type of the first event.

According to a fourth aspect, a processing apparatus is provided, including at least one processor and an interface circuit. The interface circuit is configured to receive a signal from an apparatus other than the apparatus and transmit the signal to the processor, or send a signal from the processor to an apparatus other than the apparatus, and the processor is configured to implement the method according to any one of the second aspect or the possible designs of the second aspect by using a logic circuit or executing a code instruction.

According to a fifth aspect, a terminal device is provided, including the apparatus according to any one of the fourth aspect or the possible designs of the fourth aspect.

Optionally, the terminal device is a vehicle.

According to a sixth aspect, a computer-readable storage medium is provided. The readable-storage medium is configured to store instructions, and when the instructions are executed, the method according to any one of the second aspect or the possible designs of the second aspect is implemented.

According to a seventh aspect, a computer program product is provided. The computer program product stores instructions, and when the computer program product runs on a computer, the computer is enabled to perform the method according to any one of the second aspect or the possible designs of the second aspect.

For details about technical effect of the second aspect to the seventh aspect, refer to technical effect that can be achieved by corresponding designs in the first aspect. Details are not described herein again.

### BRIEF DESCRIPTION OF DRAWINGS

FIG. 1 is an example of a functional block diagram of a vehicle according to an embodiment of this application;
FIG. 2 is a flowchart of an intelligent parking method according to an embodiment of this application;
FIG. 3 is a flowchart of a parking control method according to an embodiment of this application; and
FIG. 4 is a diagram of a structure of a processing apparatus according to an embodiment of this application.

### DESCRIPTION OF EMBODIMENTS

In this application, "at least one" means one or more, and "a plurality of" means two or more. "And/or" describes an association relationship between associated objects and represents that three relationships may exist. For example, A and/or B may represent the following cases: Only A exists, both A and B exist, and only B exists, where A and B each may be singular or plural. In text descriptions of this application, a character "/ generally indicates that associated objects are in an "or" relationship. In a formula in this application, the character "/" indicates that associated objects are divided by each other. "Including at least one of A, B, and C" may indicate: including A; including B; including C; including A and B; including A and C; including B and C; and including A, B, and C.

Automatic parking is a basic function of intelligent driving. In an actual parking scenario, the ground and surrounding environments are complex and changeable, and the following problems often occur.
1. When a vehicle encounters a low-rise obstacle (like a pavement bump, a speed bump, a road edge, a shallow slope, or a pit on a road) during parking, if the vehicle directly travels across the obstacle, the vehicle may fail to cross or may have a collision risk caused by overshooting after the crossing.
2. In a wheel chock parking space scenario, whether parking ends is determined only based on a wheel chock position provided by a vehicle sensing system. Because the vehicle sensing system has an error in identifying a position of a low-rise obstacle, the vehicle cannot park in place or even travel across the wheel chock.
3. During parking, the vehicle is usually controlled at a low speed. There is a delay or overshoot in responding to a control instruction by a chassis actuator, for example, the vehicle brakes in advance when the vehicle travels to the end of a track. This does not comply with a driving habit of a user.

For the foregoing one or more technical problems, technical solutions of this application are improved, so that a safety risk of automatic parking of the vehicle can be reduced and user experience can be improved.

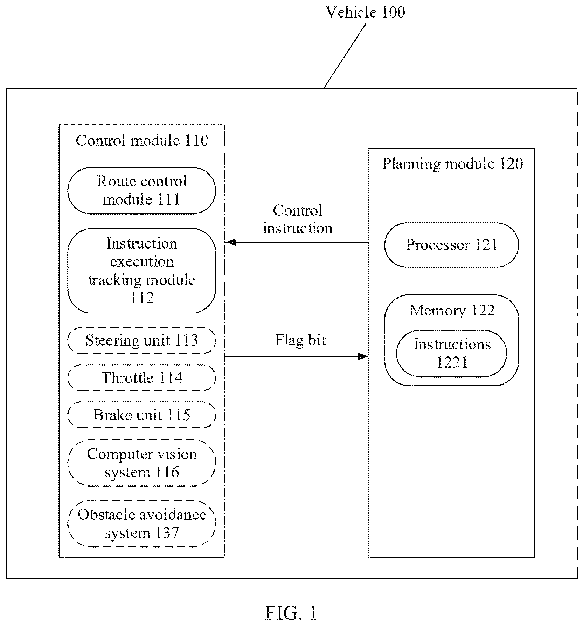

FIG. 1 is an example of a functional block diagram of a vehicle according to an embodiment of this application. In some embodiments, a vehicle 100 may be configured to be in a fully or partially autonomous driving mode. When the vehicle 100 is in the autonomous driving mode, current statuses of the vehicle and an ambient environment of the vehicle may be determined, and the vehicle 100 is controlled to travel or stop based on the determined information. For example, automatic parking is a basic function in the automatic driving mode. During automatic parking, the vehicle 100 may plan a parking path based on a parking end position and a current position of the ego vehicle, and control the ego vehicle to determine an end point of the parking path.

As shown in FIG. 1, the vehicle 100 may include a control module 110 and a planning module 120. In some embodiments, the control module 110 may also be referred to as a control system 110, and the planning module 120 may also be referred to as a planning system 120.

The control module 110 is configured to control the vehicle 100 according to a control instruction delivered by the planning module 120, for example, control the vehicle 100 to park based on a first parking path. The control module 110 may be further configured to track a status of the vehicle, and report (for example, report a flag bit) to the planning module when the vehicle is abnormal (for example, a first event occurs, and for a specific manifestation of the first event, refer to related descriptions below).

The planning module 120 is configured to plan a traveling status of the vehicle, for example, plan a parking path of the vehicle. The planning module 120 may further replan the traveling status of the vehicle when parking of the vehicle is abnormal, for example, determine to stop parking or determine a new parking path.

In some embodiments, the control module 110 may specifically include a route control module 111 and an instruction execution tracking module 112. The route control module 111 is configured to control a driving route of the vehicle 100 according to the control instruction delivered by the planning module 120. The instruction execution tracking module 112 is configured to track execution of the control instruction by the route control module 111, and report a flag bit to the planning module 120 when the execution of the control instruction is abnormal. The flag bit indicates that the first event occurs or indicates the planning module 120 to replan a route. It may be understood that the instruction execution tracking module 112 may be actually named in another manner. This is not limited in this application.

Certainly, the control module 110 may further include various other elements, for example, various types of chassis actuators such as a steering unit 113, a throttle 114, and a brake unit 115, and the control module 110 may specifically control an actual traveling path of the vehicle 100 by using the various types of chassis actuators such as the steering unit 113, the throttle 114, and the brake unit 115. The steering unit 113 may be operated to adjust a traveling direction of the vehicle 100. For example, in an embodiment, the steering unit 113 may be a steering wheel system. The throttle 114 is configured to control an operating speed of an engine and further control a speed of the vehicle 100. The brake unit 115 is configured to control the vehicle 100 to decelerate.

In some embodiments, the control module 110 may further include software modules such as a computer vision system 116 and an obstacle avoidance system 137, to assist the control module 110 in controlling the vehicle 100 to travel. The computer vision system 116 may be operated to process and analyze an image captured by a camera sensor to identify a target and/or feature in a surrounding environment of the vehicle 100. The target and/or the feature may include a traffic signal, a road boundary, an obstacle, and the like. The obstacle avoidance system 137 is configured to recognize, evaluate, and avoid or otherwise cross a potential obstacle in the environment of the vehicle 100.

Certainly, in other embodiments, the control module 110 may additionally or alternatively include components other than those shown and described. Alternatively, some of the foregoing components may be removed. This is not specifically limited in this application.

In some embodiments, the planning module 120 may specifically include at least one processor 121. The processor 121 executes instructions 1221 stored in a non-transient computer-readable medium such as a memory 122. The processor 121 may be any conventional processor, for example, a commercially available central processing unit (central processing unit, CPU). Alternatively, the processor may be a dedicated device like an application-specific integrated circuit (application-specific integrated circuit, ASIC) or another hardware-based processor. Although FIG. 1 functionally illustrates the processor, the memory, and other elements of the planning module 120 in a same block, a person of ordinary skill in the art should understand that the processor, the computer, or the memory may actually include a plurality of processors, computers, or memories that may or may not be stored in a same physical housing.

In some embodiments, the memory 122 may include the instructions 1221 (for example, program logics), and the instructions 1221 may be executed by the processor 121 to perform various functions of the vehicle 100, including the functions described above.

In addition to the instructions 1221, the memory 122 may further store data, such as a road map, route information, a position, a direction, a speed, and other vehicle data of the vehicle, and other information. This information may be used by the vehicle 100 and the planning module 120 during operation of the vehicle 100 in an autonomous mode, a semi-autonomous mode, and/or a manual mode.

The planning module 120 may control functions of the vehicle 100 based on inputs received from various subsystems (for example, the control module 110). For example, the planning module 120 may receive a flag bit from the control module 110, and determine, based on the flag bit, to complete parking or determine a second parking path. In some embodiments, the planning module 120 may be operated to provide control over many aspects of the vehicle 100 and the subsystems of the vehicle 100.

Optionally, one or more of the foregoing components may be mounted separately from or associated with the vehicle 100. For example, the memory 122 may partially or completely exist or separate from the vehicle 100. The foregoing components may be communicatively coupled together in a wired and/or wireless manner.

Optionally, the foregoing components are merely examples. In actual application, the vehicle 100 may include more, fewer, or different systems (for example, may further include a sensing system, a power supply, or a user interface), and each system may include more, fewer, or different components. In addition, the shown systems and components may be combined or divided in any manner. This is not specifically limited in this application.

The vehicle 100 may be any transportation tool, for example, a car, a truck, a motorcycle, a bus, a boat, an airplane, a helicopter, a lawn mower, a recreational vehicle, a playground vehicle, a construction device, a tram, a golf cart, a train, a trolley, or the like. This is not specifically limited in embodiments of this application.

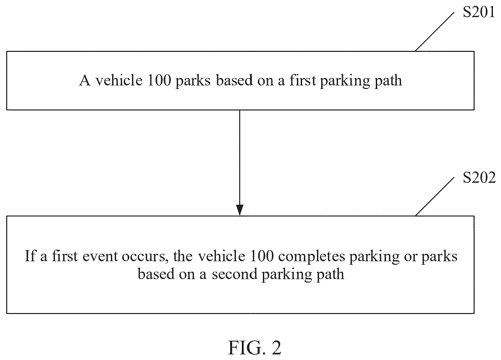

FIG. 2 is a flowchart of an intelligent parking method according to an embodiment of this application. The method may be applied to the vehicle 100 shown in FIG. 1, and the method includes S201 and S202.

S201: The vehicle 100 parks based on a first parking path.

For example, the planning module 120 of the vehicle 100 determines the first parking path. A start point of the first parking path is a current position of the vehicle 100, and an end point is a parking end point (for example, a specific parking space) of the vehicle 100. The planning module 120 delivers a control instruction to the control module 110, to instruct the control module 110 to control the vehicle to park based on the first parking path. The control module 110 executes the instruction, for example, the steering unit 113 performs steering, the throttle 114 performs acceleration, or the brake unit 115 performs deceleration, so that the vehicle 100 parks based on the first parking path.

S202: If a first event occurs, the vehicle 100 completes parking or parks based on a second parking path, where the second parking path is different from the first parking path.

The first event occurs in a process in which the vehicle 100 parks based on the first parking path. To be specific, the vehicle 100 leaves the start point of the first parking path and has not reached an end point of the first parking path. In some embodiments, the control module 110 may obtain chassis tracking information of the vehicle 100, and determine, based on the chassis tracking information, that the first event occurs.

After the control module 110 detects that the first event occurs, the control module 110 may determine that there is a safety risk when the vehicle continues to park based on the first parking path. Then, the control module 110 generates a flag bit, and reports the flag bit to the planning module 120. The flag bit may indicate that the first event occurs, and/or the flag bit may indicate the planning module 120 to replan the parking path. Certainly, the flag bit herein is merely an example. In actual application, reporting content related to the first event may alternatively be implemented by reporting information in another form. This is not limited in this application.

After receiving the flag bit, the planning module 120 performs replanning based on the flag bit and a remaining path of the vehicle 100, to determine that the vehicle 100 is to complete parking or determine the second parking path. The second parking path is different from the first parking path.

For example, if the remaining path of the first parking path when the first event occurs does not exceed a first distance (which indicates that the vehicle is close to the end point), the planning module determines that the vehicle 100 can complete parking. For example, if a distance between the vehicle 100 and the parking space wheel chock does not exceed 10 cm, it indicates that the vehicle 100 has entered a parking space, and parking may be directly completed. If the remaining path of the first parking path when the first event occurs exceeds a second distance, the planning module may replan the parking path, for example, the second parking path, based on a current position of the vehicle 100 and a parking end point. For example, if a distance between the vehicle 100 and the parking space wheel chock exceeds 1 meter, it indicates that the vehicle 100 has not completely entered a parking space, and there is a safety risk when the vehicle 100 continues to travel along an original path (the first parking path) (for example, forcibly traveling across an obstacle causes vehicle overshooting). In this case, a parking path that can avoid the obstacle may be replanned. It may be understood that the first preset distance and the second preset distance may be the same or different.

After determining that the vehicle 100 is to complete parking or determining the second parking path, the planning module 120 delivers a control instruction to the control module 110, so that the control module 110 controls the vehicle to complete parking or continue parking based on the second parking path. For example, the planning module 120 sends a first control instruction to the control module 110, and the control module 110 executes the first control instruction to control the vehicle 100 to complete parking (for example, the steering unit 113, the throttle 114, and the brake unit 115 stop working). Alternatively, the planning module 120 sends a second control instruction to the control module 110, and the control module 110 executes the second control instruction to control the vehicle 100 to park based on the second parking path (for example, the steering unit 113 controls the vehicle 100 to turn, or the throttle 114 controls the vehicle 100 to accelerate).

In some embodiments, that the second parking path is different from the first parking path may specifically mean that a remaining path of the second parking path is different from the remaining path of the first parking path, or the second parking path does not overlap any segment of the first parking path.

The second parking path being different from the first parking path is represented in a specific status of the vehicle 100, and may include: A start gear of the vehicle when the vehicle 100 parks based on the second parking path is different from a gear of the vehicle before occurrence of the first event; and/or a start traveling direction of the vehicle when the vehicle 100 parks based on the second parking path is different from a last traveling direction of the vehicle before occurrence of the first event.

For example, when the vehicle 100 performs back-in angle parking, the vehicle 100 is initially in a reverse gear (R gear) and travels backward. After the first event occurs, the vehicle 100 parks based on the second parking path: The vehicle 100 first switches to an automatic gear (D gear), moves forward for a distance, then switches to the reverse gear, and travels backward. The vehicle 100 completes back-in angle parking by traveling across an obstacle or bypassing an obstacle.

Based on the foregoing solution, in the automatic parking process of the vehicle 100, when the first event occurs, the vehicle 100 completes parking or parks based on a new parking route (namely, the second parking path). This can effectively avoid a safety risk or slow-start parking experience caused by continuing to park based on an original parking route (namely, the first parking path), and can improve user experience.

In this embodiment of this application, the first event may be any event in which a safety risk is caused if the vehicle 100 continues to park based on the first parking path. The following several possible events are as follows.

(1) The vehicle 100 is stuck by an obstacle, and the vehicle 100 still does not start after a drive torque of the vehicle 100 increases to an upper torque limit.

After an automatic parking function of the vehicle 100 is enabled, the control module 110 controls the vehicle 100 to travel along the first parking path delivered by the planning module. If the control module 110 detects that the vehicle 100 encounters an obstacle (for example, detects, by using the computer vision system 116, a pavement bump, a speed bump, a road edge, a shallow slope, or a pit on a road) on the first parking path, the vehicle 100 is stuck by the obstacle (for example, the instruction execution tracking module 112 detects that an actual speed of the vehicle 100 is 0). The control module 110 increases the drive torque of the vehicle 100, and attempts to start in an original traveling direction, to control the vehicle 100 to continue to travel along a remaining path of the first parking path. If the vehicle 100 still does not start after the drive torque of the vehicle 100 reaches the upper torque limit, the control module 110 may determine that it is difficult for the vehicle 100 to travel across the obstacle or there is a safety risk if the vehicle 100 continues to travel across the obstacle. To be specific, if the vehicle 100 still travels along the first parking path, parking cannot be completed or even there are safety risks.

In some embodiments, the upper torque limit may be positively correlated with a length of the remaining path of the first parking path when the first event occurs. Generally, a larger drive torque indicates a larger impulse of the vehicle 100 and a longer distance traveled by the vehicle 100 after traveling across the obstacle. Therefore, when the remaining path is shorter (which indicates that the obstacle is closer to the parking end point), the drive torque of the vehicle 100 cannot be excessively large, to avoid a safety risk caused by overshooting of the vehicle 100 traveling across the obstacle, for example, travels across a parking space wheel chock, rushes out of a parking space, or hits another object.

In some embodiments, the upper torque limit may be obtained through table look-up based on the remaining path. For example, the vehicle 100 presets a table of a mapping relationship between a distance and an upper torque limit, and the control module 110 may obtain, through table look-up based on a distance of a current remaining path, the upper torque limit corresponding to a current position. Data in the table is calibrated based on experience and/or a real vehicle test.

In this case, when the vehicle 100 is stuck by an obstacle and still does not start after the drive torque of the vehicle 100 increases to the upper torque limit, the vehicle 100 switches a parking solution (completing parking or switching to a new parking route). Otherwise, the vehicle 100 may attempt to travel across the obstacle based on an original route, to try to travel across low obstacles without risks, travel across low obstacles with medium risks with caution, and avoid traveling across low obstacles with high risks. This improves a safety factor of automatic parking, reduces a takeover rate of a driver, and improves a parking success rate.

(2) Speed reversal is caused by a collision of the vehicle 100 with an obstacle.

After an automatic parking function of the vehicle 100 is enabled, the control module 110 controls the vehicle 100 to travel along the first parking path delivered by the planning module. If the control module 110 detects that instantaneous reversal of a speed occurs when the vehicle is rebounded (for example, the instruction execution tracking module 112 detects that an actual speed direction of the vehicle 100 is opposite to a speed direction controlled by the steering unit 113) because the vehicle 100 encounters an obstacle (for example, detects, by using the computer vision system 116, a pavement bump, a speed bump, a road edge, a shallow slope, or a pit on a road) on the first parking path and hits the obstacle, the control module 110 may determine that it is difficult for the vehicle 100 to travel across the obstacle or there is a safety risk if the vehicle 100 continues to travel across the obstacle. To be specific, if the vehicle 100 still travels along the first parking path, parking cannot be completed or even there are safety risks.

In this case, when being collided and rebounded, the vehicle 100 switches the parking solution (completing parking or switching to a new parking route), so that a safety risk caused by the vehicle 100 directly traveling across an obstacle can be reduced. In addition, in some scenarios, when the vehicle 100 is not completely stopped after being collided and rebounded, the vehicle 100 can automatically shift a gear or shift a direction or the like, to implement a more comfortable human-like gear and direction shifting strategy, so that a parking speed can be increased without manual takeover, and user experience of a parking function can be improved.

(3) The vehicle 100 stops in advance.

After an automatic parking function of the vehicle 100 is enabled, the control module 110 controls the vehicle 100 to travel along the first parking path delivered by the planning module. If the control module 110 detects that the vehicle 100 stops in advance before arriving at the parking end point (for example, the instruction execution tracking module 112 detects that an actual speed of the vehicle 100 is 0 but the vehicle 100 does not travel all the first parking path) on the first parking path, with a specific reason that, for example, the obstacle avoidance system 137 identifies that a potential obstacle in an environment and prevents the vehicle 100 from crossing the obstacle by stopping in advance, the control module 110 may determine that the vehicle 100 has a safety risk. To be specific, if the vehicle 100 still travels along the first parking path, parking cannot be completed or even there are safety risks.

In some embodiments, that the vehicle 100 stops in advance is specifically: The vehicle 100 stops in advance within a preset range (for example, a distance of 20 cm) from the parking end point. For example, the instruction execution tracking module 112 detects that the actual speed of the vehicle 100 is 0, and that a length of a remaining path in the first parking path is less than 20 cm.

In this case, the vehicle 100 stops before arriving at the parking end point, the vehicle 100 switches the parking solution (for example, completing parking or switching to a new parking route), to avoid a risk of traveling across an obstacle like a wheel chock at the parking end point, and no manual takeover is required. This can enhance user experience of using the automatic parking function. In addition, for the remaining path of the first parking path, the control system 110 may no longer continue tracking, so that a closed-loop tracking short distance of the control system 110 can be reduced, and energy consumption can be reduced.

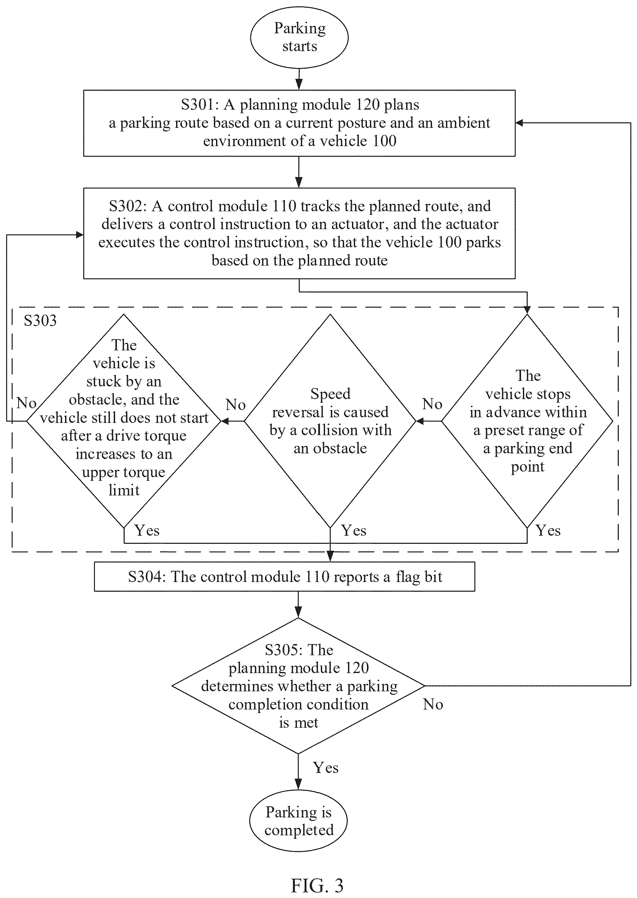

With reference to the foregoing three events, another parking control method is described herein. As shown in FIG. 3, the method includes S301 to S305.

S301: After parking of the vehicle 100 starts, the planning module 120 plans a parking route based on a current posture and an ambient environment of the vehicle 100.

S302: The control module 110 tracks the planned route, and delivers a control instruction (for example, a torque determining instruction or a steering wheel angle instruction) to an actuator (for example, a throttle or a steering wheel), and the actuator executes the control instruction, so that the vehicle 100 parks based on the planned route.

S303: In a process in which the vehicle 100 parks based on the planned route, the control module 110 monitors whether the following events occur. (1) The vehicle 100 is stuck by an obstacle, and the vehicle 100 still does not start after a drive torque of the vehicle 100 increases to an upper torque limit. (2) Speed reversal is caused by a collision of the vehicle 100 with an obstacle. (3) The vehicle 100 stops in advance within a preset range of a parking end point.

If at least one of the foregoing events occurs, the following steps are performed.

S304: The control module 110 reports a flag bit to the planning module 120, and the planning module 120 receives the flag bit.

S305: The planning module 120 determines, based on a current vehicle posture, whether a parking completion condition is met.

If the parking completion condition is met, parking is complete.

If the parking completion condition is not met, step 301 is performed. The planning module 120 plans a new parking route, and repeats the foregoing procedure until parking is completed.

It may be understood that the several first events listed above are merely examples rather than specific limitations. In actual application, there may be other extensions. This is not limited in this application.

In some embodiments, the vehicle 100 may further determine the second parking path based on a specific type of the first event. For example, when the first event is that the vehicle 100 is stuck by an obstacle, and the vehicle still does not start after the drive torque of the vehicle increases to the upper torque limit, the higher the upper torque limit, the more difficult it is for the vehicle 100 to travel across the obstacle. In this case, the planning module 120 may replan the second parking path with reference to the upper torque limit. For example, a larger upper torque limit indicates a larger deviation degree between the second parking path and the first parking path. For different types of an event, the control module 110 may report flag bits with different values to the planning module 120, so that the planning module 120 distinguishes types of the first event. In this way, parking accuracy can be further improved, and parking efficiency can be improved.

It may be understood that the foregoing embodiments may be separately implemented, or may be implemented in combination with each other. This is not limited.

Based on a same technical idea, an embodiment of this application further provides a processing apparatus. The processing apparatus may include the control module 110 and/or the planning module 120 described above.

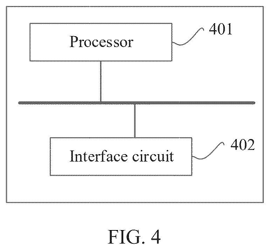

As shown in FIG. 4, a processing apparatus includes at least one processor 401 and an interface circuit 402. The interface circuit 402 is configured to receive a signal from an apparatus other than the apparatus and transmit the signal to the processor 401, or send a signal from the processor 401 to an apparatus other than the apparatus. The processor 401 is configured to implement, by using a logic circuit or executing a code instruction, the foregoing method executed by the vehicle 100, or implement the foregoing methods/method executed by the control module 110 and/or the planning module 120.

It should be understood that the processor in this embodiment of this application may be implemented by using hardware or may be implemented by using software. When the processor is implemented by using hardware, the processor may be a logic circuit, an integrated circuit, or the like. When the processor is implemented by using software, the processor may be a general-purpose processor, and is implemented by reading software code stored in a memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA), another programmable logic device, a discrete gate, a transistor logic device, a discrete hardware component, or the like. The general-purpose processor may be a microprocessor, or the processor may be any conventional processor or the like.

It should be understood that the memory in this embodiment of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. Through an example but not a limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate, a transistor logic device, or a discrete hardware component, the memory (storage module) may be integrated into the processor.

It should be noted that the memory described in the text is intended to include, but is not limited to these and any other suitable types of memories.

Based on a same technical idea, an embodiment of this application further provides a terminal device. The terminal device may perform the method performed by the vehicle 100, or perform the methods/method performed by the control module 110 and/or the planning module 120.

Optionally, the terminal device is a vehicle.

Based on a same technical idea, an embodiment of this application further provides a computer-readable storage medium. The readable-storage medium is configured to store instructions. When the instructions are executed, the method performed by the vehicle 100 is implemented, or the methods/method performed by the control module 110 and/or the planning module 120 are/is implemented.

Based on a same technical idea, an embodiment of this application further provides a computer program product. The computer program product stores instructions. When the instructions are run on a computer, the computer is enabled to perform the method performed by the vehicle 100, or the computer is enabled to perform the methods/method performed by the control module 110 and/or the planning module 120 described above.

A person skilled in the art should understand that embodiments of this application may be provided as methods, systems, or computer program products. Therefore, this application may be in a form of a hardware-only embodiment, a software-only embodiment, or an embodiment combining software and hardware aspects. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, and computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to this application without departing from the scope of this application. Thus, this application is intended to cover such modifications and variations to this application, provided that the modifications and variations fall within the scope of the claims of this application and their equivalent technologies.

## Claims

1. An intelligent parking method, wherein the method comprises:
parking, by a vehicle, based on a first parking path; and
if a first event occurs, completing, by the vehicle, parking or parking based on a second parking path, wherein the second parking path is different from the first parking path.

2. The method according to claim 1, wherein the first event further comprises:
the vehicle is stuck by an obstacle, and the vehicle still does not start after a drive torque of the vehicle increases to an upper torque limit; or
speed reversal is caused by a collision of the vehicle with an obstacle; or
the vehicle stops in advance.

3. The method according to claim 2, wherein the upper torque limit is positively correlated with a length of a remaining path of the first parking path when the first event occurs.

4. The method according to any one of claims 1 to 3, wherein
a start gear of the vehicle when the vehicle parks based on the second parking path is different from a gear of the vehicle before occurrence of the first event; and/or
a start traveling direction of the vehicle when the vehicle parks based on the second parking path is different from a last traveling direction of the vehicle before occurrence of the first event.

5. The method according to any one of claims 1 to 4, wherein the method further comprises:
obtaining, by the vehicle, chassis tracking information, and determining, based on the chassis tracking information, that the first event occurs.

6. The method according to claim 5, wherein the obtaining, by the vehicle, chassis tracking information, and determining, based on the chassis tracking information, that the first event occurs comprises:
obtaining, by a control module of the vehicle, the chassis tracking information, and determining, based on the chassis tracking information, that the first event occurs; and
the method further comprises:
reporting, by the control module of the vehicle, a flag bit to a planning module of the vehicle, wherein the flag bit indicates that the first event occurs.

7. The method according to claim 6, wherein the completing, by the vehicle, parking or parking based on a second parking path comprises:
receiving, by the planning module of the vehicle, the flag bit from the control module, and determining, based on the flag bit, to complete parking or determining a second planned path; and
sending, by the planning module, a control instruction to the control module, and receiving, by the control module, the control instruction, and completing parking according to the control instruction or parking based on the second parking path.

8. The method according to claim 7, wherein different values of the flag bit indicate different types of the first event.

9. The method according to any one of claims 1 to 8, wherein the completing, by the vehicle, parking or parking based on a second parking path comprises:
if the remaining path of the first parking path when the first event occurs does not exceed a preset distance, completing, by the vehicle, parking; or
if the remaining path of the first parking path when the first event occurs exceeds a preset distance, parking, by the vehicle, based on the second parking path.

10. The method according to any one of claims 1 to 9, wherein the method further comprises:
determining, by the vehicle, the second parking path based on a type of the first event.

11. An intelligent parking method, comprising:
determining, by a planning module, a first parking path;
controlling, by a control module, a vehicle to park based on the first parking path; and
if a first event occurs, determining, by the planning module, that the vehicle is to complete parking, and controlling, by the control module, the vehicle to complete parking; or determining, by the planning module, a second parking path, and controlling, by the control module, the vehicle to park based on the second parking path, wherein the second parking path is different from the first parking path.

12. The method according to claim 11, wherein the first event further comprises:
the vehicle is stuck by an obstacle, and the vehicle still does not start after a drive torque of the vehicle increases to an upper torque limit; or
speed reversal is caused by a collision of the vehicle with an obstacle; or
the vehicle stops in advance.

13. The method according to claim 12, wherein the upper torque limit is positively correlated with a length of a remaining path of the first parking path when the first event occurs.

14. The method according to any one of claims 11 to 13, wherein
a start gear of the vehicle when the vehicle parks based on the second parking path is different from a gear of the vehicle before occurrence of the first event; and/or
a start traveling direction of the vehicle when the vehicle parks based on the second parking path is different from a last traveling direction of the vehicle before occurrence of the first event.

15. The method according to any one of claims 11 to 14, further comprising:
obtaining, by the control module, chassis tracking information, and determining, based on the chassis tracking information, that the first event occurs.

16. The method according to claim 15, wherein the method further comprises:
reporting, by the control module, a flag bit to the planning module, wherein the flag bit indicates that the first event occurs.

17. The method according to claim 16, wherein the determining, by the planning module, that the vehicle is to complete parking, and controlling, by the control module, the vehicle to complete parking comprises: determining, by the planning module based on the flag bit, that the vehicle is to complete parking, and sending a first control instruction to the control module; and executing, by the control module, the first control instruction to control the vehicle to complete parking; or
the determining, by the planning module, a second parking path, and controlling, by the control module, the vehicle to park based on the second parking path comprises: determining, by the planning module, the second parking path based on the flag bit, and sending a second control instruction to the control module; and executing, by the control module, the second control instruction to control the vehicle to park based on the second parking path.

18. The method according to claim 17, wherein different values of the flag bit indicate different types of the first event.

19. The method according to any one of claims 11 to 18, wherein the determining, by the planning module, that the vehicle is to complete parking, and controlling, by the control module, the vehicle to complete parking; or determining, by the planning module, a second parking path, and controlling, by the control module, the vehicle to park based on the second parking path comprises:
if the remaining path of the first parking path when the first event occurs does not exceed a preset distance, determining, by the planning module, that the vehicle is to complete parking, and controlling, by the control module, the vehicle to complete parking; or
if the remaining path of the first parking path when the first event occurs exceeds a preset distance, determining, by the planning module, the second parking path, and controlling, by the control module, the vehicle to park based on the second parking path.

20. The method according to any one of claims 11 to 19, wherein the method further comprises:
determining, by the planning module, the second parking path based on a type of the first event.

21. An intelligent parking apparatus, comprising:
a planning module, configured to determine a first parking path; and
a control module, configured to control a vehicle to park based on the first parking path, wherein
if a first event occurs, the planning module is further configured to determine that the vehicle is to complete parking, and the control module is further configured to control the vehicle to complete parking; or the planning module is further configured to determine a second parking path, and the control module is further configured to control the vehicle to park based on the second parking path, wherein the second parking path is different from the first parking path.

22. A processing apparatus, comprising at least one processor and an interface circuit, wherein the interface circuit is configured to: receive a signal from an apparatus other than the apparatus and transmit the signal to the processor, or send a signal from the processor to an apparatus other than the apparatus, and the processor is configured to implement the method according to any one of claims 11 to 20 by using a logic circuit or executing code instructions.

23. A terminal device, comprising the processing apparatus according to claim 22.

24. A computer-readable storage medium, wherein the readable storage medium is configured to store instructions, and when the instructions are executed, the method according to any one of claims 11 to 20 is implemented.

25. A computer program product, wherein the computer program product stores instructions, and when the computer program product runs on a computer, the computer is enabled to perform the method according to any one of claims 11 to 20.
